# EUROPEAN PATENT APPLICATION

(11) **EP 4 691 810 A1**
(43) Date of publication of application: **11.02.2026**
(21) Application number: 24777516.6
(22) Date of filing: 02.02.2024
(51) Int. Cl.: B60G 17/015

(54) **OBSTACLE AVOIDANCE METHOD FOR VEHICLE, AND ACTIVE SUSPENSION SYSTEM, SUSPENSION CONTROL APPARATUS AND VEHICLE**

(30) Priority: 30.03.2023 CN 202310378844
(71) Applicant: BYD Company Limited, Shenzhen, Guangdong 518118 (CN)
(72) Inventor: LIAN, Yubo, Shenzhen, Guangdong 518118 (CN); LIAO, Yinsheng, Shenzhen, Guangdong 518118 (CN); ZHANG, Hongzhou, Shenzhen, Guangdong 518118 (CN); LI, Xie, Shenzhen, Guangdong 518118 (CN); SUN, Zhongbo, Shenzhen, Guangdong 518118 (CN)
(74) Representative: Mathys & Squire
(86) International application number: PCT/CN2024/075568
(87) International publication number: WO 2024/198722

(57) **Abstract**

Provided are an obstacle avoidance method for a vehicle (100), an active suspension system (16), a suspension control apparatus, and a vehicle (100). The vehicle (100) includes a vehicle body (12), a wheel (14), and an active suspension system (16). The active suspension system (16) connects the vehicle body (12) and the wheel (14). The obstacle avoidance method includes: obtaining road surface information, where the road surface information includes obstacle information; and when it is determined, based on the obstacle information, that the vehicle (100) is capable of passing over an obstacle, controlling the active suspension system (16) to enable the vehicle (100) to pass over the obstacle.

## Description

### PRIORITY INFORMATION

This application claims priority to and the benefit of Chinese Patent Application No. 202310378844.9 filed with the China National Intellectual Property Administration on March 30, 2023, which is incorporated herein by reference in its entirety.

### TECHNICAL FIELD

This application relates to the field of vehicle technologies, and in particular, to an obstacle avoidance method for a vehicle, an active suspension system, a suspension control apparatus, and a vehicle.

### BACKGROUND

In a related technology, a vehicle has a suspension system. The suspension system is connected between a vehicle body and a wheel, and is used to transfer force between the wheel and the vehicle body. The main functions of the suspension system include buffering, vibration filtering, and steering. For example, when the vehicle travels on a road surface, the suspension system can reduce vibration and improve comfort of occupants in a cabin. Currently, the suspension system includes an active suspension system. The active suspension system can adjust vehicle body height and damping force based on a road surface condition to improve intelligent control of the vehicle. However, when the vehicle encounters an obstacle and cannot normally pass over the obstacle, the vehicle chooses to detour or stop, and the vehicle cannot adapt to diverse road surfaces.

### SUMMARY

Implementations of this application provide an obstacle avoidance method for a vehicle, an active suspension system, a suspension control apparatus, and a vehicle.

An implementation of this application provides an obstacle avoidance method for a vehicle, wherein the vehicle includes a vehicle body, a wheel, and an active suspension system, and wherein the active suspension system connects the vehicle body and the wheel. The obstacle avoidance method includes:
obtaining road surface information, wherein the road surface information includes obstacle information; and
when it is determined, based on the obstacle information, that the vehicle is capable of passing over an obstacle, controlling the active suspension system to enable the vehicle to pass over the obstacle.

According to the obstacle avoidance method for the vehicle, the obstacle information can be obtained, and when it is determined, based on the obstacle information, that the vehicle is capable of passing over the obstacle, the active suspension system can be controlled to enable the vehicle to pass over the obstacle. In this way, the vehicle can adapt to diverse road surfaces, and driving safety is also improved.

An active suspension system according to an implementation of this application includes at least one suspension structure, wherein the suspension structure includes a motor and a shock absorber electrically connected to the motor, the motor being configured to control a rotation direction and a rotation speed of the motor when it is determined that a vehicle is capable of passing over an obstacle, so that the shock absorber supports a vehicle body of the vehicle to pass over the obstacle.

A suspension control apparatus according to an implementation of this application includes a controller, wherein the controller is configured to be electrically connected to an active suspension system, and the controller is configured to implement steps of the obstacle avoidance method in the foregoing implementation.

A vehicle according to an implementation of this application includes the active suspension system according to the foregoing implementations and/or the suspension control apparatus according to the foregoing implementation.

According to the active suspension system, the suspension control apparatus, and the vehicle, obstacle information can be obtained, and when it is determined, based on the obstacle information, that the vehicle is capable of passing over the obstacle, the active suspension system can be controlled to enable the vehicle to pass over the obstacle. In this way, the vehicle can adapt to diverse road surfaces, and driving safety is also improved.

Additional aspects and advantages of this application are partially presented in the following descriptions, and partially become clear in the following descriptions, or are learned of through practice of this application.

### BRIEF DESCRIPTION OF THE DRAWINGS

The foregoing and/or additional aspects and advantages of this application are clear and easily understood in descriptions of implementations with reference to the accompanying drawings.
FIG. 1 is a schematic flowchart of an obstacle avoidance method according to an implementation of this application;
FIG. 2 and FIG. 3 are diagrams of a structure of a vehicle according to an implementation of this application;
FIG. 4 and FIG. 5 are diagrams of a process in which a vehicle passes over an obstacle according to an implementation of this application;
FIG. 6 is a diagram of a structure of a shock absorber according to an implementation of this application; and
FIG. 7 is another schematic flowchart of an obstacle avoidance method according to an implementation of this application.

Reference numerals:
vehicle: 100; vehicle body: 12; wheel: 14; active suspension system: 16; suspension structure: 17; shock absorber: 18; elastic element: 20; outer cylinder assembly: 22; piston rod: 24; piston assembly: 26; drive assembly: 28; upper chamber: 30; lower chamber: 32; compression relief valve: 34; restoration relief valve: 36; accumulator: 38; motor: 40; fluid pump: 42; first port: 43; second port: 45; controller: 44; suspension control apparatus: 46.

### DESCRIPTION OF EMBODIMENTS

The following describes in detail implementations of this application. Examples of the implementations are shown in the accompanying drawings, where same or similar reference numerals indicate same or similar elements, or elements that have same or similar functions. The implementations described below with reference to the accompanying drawings are examples and merely intended to explain this application, and are not intended to limit this application.

In descriptions of this application, it should be noted that unless otherwise expressly specified and limited, terms "mount", "interconnect", and "connect" will be understood in a broad sense. For example, such terms may indicate fastening, a detachable connection, or an integral connection; may indicate a mechanical connection or an electrical connection; and may indicate direct interconnection, indirect interconnection through an intermediate medium, an internal connection between two elements, or an interaction relationship between two elements. For a person of ordinary skill in the art, a specific meaning of the foregoing terms in this application may be understood based on a specific situation.

The disclosure of this specification provides many different implementations or examples for implementing different structures of this application. To simplify the disclosure of this application, components and disposition of specific examples are described herein in this specification. Certainly, such components and disposition are merely examples and are not intended to limit this application. In addition, numbers and/or letters are repeatedly referenced in different examples of this application. This repetition is for the purpose of simplicity and clarity and does not indicate a relationship between various implementations and/or disposition discussed. In addition, this application provides examples of various specific processes and materials, but a person of ordinary skill in the art may be aware of application of other processes and/or use of other materials.

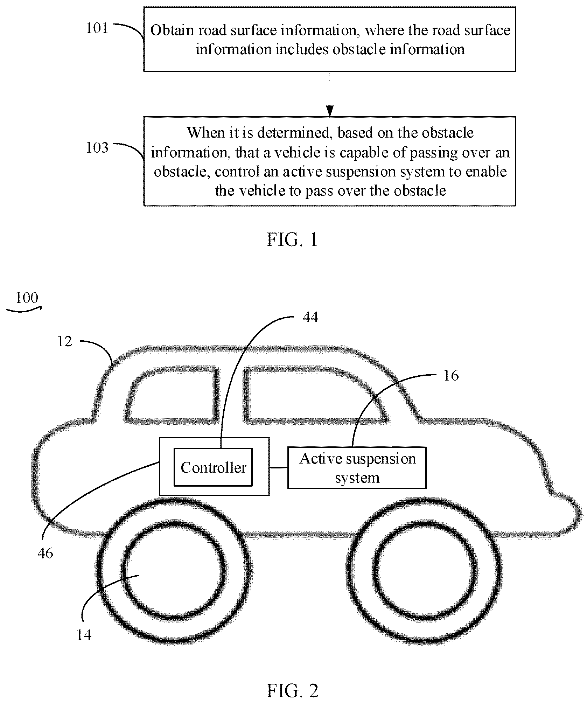

Referring to FIG. 1 and FIG. 2, an implementation of this application provides an obstacle avoidance method for a vehicle 100. The vehicle 100 includes a vehicle body 12, a wheel 14, and an active suspension system 16. The active suspension system 16 connects the vehicle body 12 and the wheel 14. The obstacle avoidance method includes:

Step 101: obtain road surface information, where the road surface information includes obstacle information.

Step 103: when it is determined, based on the obstacle information, that the vehicle 100 is capable of passing over an obstacle 200, controlling the active suspension system 16 to enable the vehicle 100 to pass over the obstacle 200.

According to the obstacle avoidance method for the vehicle 100, obstacle information of the road surface information can be obtained, and when it is determined, based on the obstacle information, that the vehicle 100 is capable of passing over the obstacle 200, the active suspension system 16 can be controlled to enable the vehicle 100 to pass over the obstacle 200. In this way, the vehicle 100 can adapt to diverse road surfaces, and driving safety is also improved.

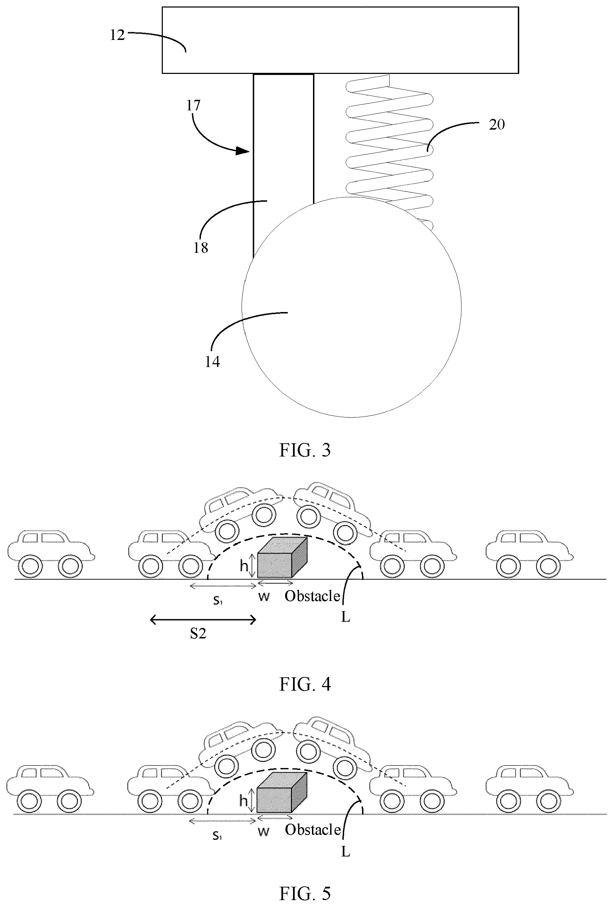

In an optional implementation, the wheel 14 may be connected to a swing arm and a steering knuckle, and the active suspension system 16 may include a plurality of suspension structures 17. Referring to FIG. 3, each suspension structure 17 is fastened to a swing arm or a steering knuckle to connect each wheel 14 and the vehicle body 12. The active suspension system 16 is configured, so that each of the suspension structures 17 can separately drive each wheel 14 of the vehicle off the ground.

In this application, step 101 may be performed first to obtain the road surface information, and when the obstacle information is obtained from the road surface information, step 103 may be performed. The road surface information may be road surface information on a forward path of the vehicle 100, and the road surface information may include the obstacle information. The road surface information can be obtained by using a sensor. For example, the road surface information can be obtained by using one or more of the following: a camera, an infrared sensor, and a radar. For another example, the road surface information can be obtained through a preview system of the vehicle.

In an implementation, the obstacle information includes a size and a type of the obstacle 200. The type of the obstacle 200 may include an obstacle sunken into the road surface or an obstacle protruding from the road surface. The obstacle sunken into the road surface may be, for example, a pothole, and the obstacle protruding from the road surface may be, for example, a stone.

Referring to FIG. 4 and FIG. 5, the size of the obstacle 200 may include a three-dimensional geometric size of the obstacle 200, including a shape feature, a height 'h', a width 'w', and a length. The width w may mean a size of an obstacle 200 in a forward direction of the vehicle 100. The length may mean a size of an obstacle 200 in a left-right direction of the vehicle 100.

In an implementation, a size of an obstacle 200 that the vehicle 100 can normally pass over may be predetermined. When a size of an obstacle 200 obtained in real time matches the preset size of the obstacle 200 that can be normally passed over, it is determined that the vehicle 100 can normally pass over the obstacle 200, and the vehicle 100 can normally travel and pass over the obstacle 200. When the size of the obstacle 200 obtained in real time does not match the preset size of the obstacle 200 that can be normally passed over, it is determined that the vehicle 100 cannot normally pass over the obstacle 200, and it is further determined whether the vehicle 100 can pass over the obstacle 200.

In an implementation, a type of the obstacle 200 that the vehicle 100 can normally pass over may be predetermined. When a type of the obstacle 200 obtained in real time matches the preset type of the obstacle 200 that can be normally passed over, it is determined that the vehicle 100 can normally pass over the obstacle 200, and the vehicle 100 can normally travel and pass over the obstacle 200. When the type of the obstacle 200 obtained in real time does not match the preset type of the obstacle 200 that can be normally passed over, it is determined that the vehicle 100 cannot normally pass over the obstacle 200, and it is further determined whether the vehicle 100 can pass over the obstacle 200.

When it is determined that the vehicle 100 is capable of passing over an obstacle 200, the active suspension system 16 is controlled to enable the vehicle 100 to pass over the obstacle 200. When the active suspension system 16 is controlled to enable the vehicle 100 to pass over the obstacle 200, the wheel 14 is off the ground at a specific height for a specific time period, and the vehicle 100 passes over the obstacle 200 in a curved trajectory. For example, the vehicle 100 passes over the obstacle 200 in a trajectory that is close to a parabola.

In some implementations, the road surface information is obtained by performing image identification on road surface image data. In this way, the road surface information can be obtained through image identification. For example, an image recognition processing process may include processing processes including denoising, extracting key information, identifying an obstacle contour, and the like.

Specifically, in an optional implementation, the vehicle 100 has a pre-view system that includes a binocular camera. The binocular camera may be installed on an inner side of a front windshield. The binocular camera can capture a road surface image and output the road surface information. The road surface information includes the road surface image data.

Image identification may be performed on the road surface image data, to obtain the road surface information. In an implementation, image identification may be performed on the road surface image data by using a deep learning image processing model, to obtain the obstacle information, such as the type, the size, and the like. The road surface image is captured by using the binocular camera, and the road surface image data is processed by using the deep learning image processing model, so that a size of the obstacle 200 obtained through analysis on the road surface image data is more consistent with an actual size of the obstacle 200, and a type of the obstacle 200 can be accurately obtained through analysis. This helps improve control accuracy.

In some implementations, the obstacle information includes the size of the obstacle 200, and the obstacle avoidance method further includes:
determining, based on the size of the obstacle 200, and a maximum jump height and a maximum jump distance of the vehicle 100, that the vehicle 100 is capable of passing over the obstacle 200.

In this way, it can be more accurately determined whether the vehicle 100 can pass over the obstacle 200.

Specifically, when the vehicle 100 is manufactured, the maximum jump height and the maximum jump distance of the vehicle 100 can be determined and stored, or the vehicle 100 can be designed based on a preset maximum jump height and a preset maximum jump distance of the vehicle 100. Factors determining the maximum jump height and the maximum jump distance of the vehicle 100 include but are not limited to a vehicle weight, a vehicle acceleration capability, a parameter and a structure of the active suspension system 16, and the like. When the vehicle 100 jumps at the maximum jump height and the maximum jump distance, a maximum size of the obstacle 200 that can be passed over can also be predetermined. This can reduce an amount of data processing performed when the vehicle 100 needs to pass over the obstacle 200 during traveling, so that the vehicle 100 responds faster when passing over the obstacle 200.

Therefore, the size of the obstacle 200 obtained in real time is compared with the maximum size of the obstacle 200. When the size of the obstacle 200 obtained in real time is smaller than the maximum size of the obstacle 200, it is determined that the vehicle 100 is capable of passing over the obstacle 200. When the size of the obstacle 200 obtained in real time is not smaller than the maximum size of the obstacle 200, it is determined that the vehicle 100 cannot pass over the obstacle 200.

In some implementations, determining, based on the size of the obstacle 200, and the maximum jump height and the maximum jump distance of the vehicle 100, that the vehicle 100 is capable of passing over the obstacle 200 includes: when the obstacle 200 is located below a highest jump curve based on the size of the obstacle 200, determining that the vehicle 100 can pass over the obstacle 200.

The highest jump curve is a jump curve formed based on the maximum jump height and the maximum jump distance that are supported by a jump capability of the vehicle 100. In this way, it can be more accurately determined whether the vehicle 100 can pass over the obstacle 200.

Specifically, during a jump, the vehicle 100 jumps in a form of a parabola, and a jump curve may be a parabola. When the vehicle travels on a road with a maximum linear speed, the highest jump curve is the jump curve formed based on the maximum jump height and the maximum jump distance that are supported by the jump capability of the vehicle 100. Therefore, when it is determined that the obstacle 200 is located below the highest jump curve, it is determined that the vehicle 100 can pass over the obstacle 200.

In some implementations, the jump capability of the vehicle 100 is obtained based on one or more of the following: active force provided by a shock absorber 18 of the active suspension system 16, a driving speed of the vehicle 100, and a state of charge of the vehicle. Optionally, a vehicle acceleration capability in a specified time period can also be used as a basis for determining the jump capability. In this way, the jump capability can be appropriately determined, so that the maximum jump curve obtained based on the jump capability is more appropriate.

Specifically, the suspension structure 17 includes a shock absorber 18 and an elastic element 20, and the elastic element 20 and the shock absorber 18 are connected between the vehicle body 12 and the wheel 14. When providing the active force, the shock absorber 18 can compress the elastic element 20, so that the elastic element 20 stores elastic potential energy. The shock absorber 18 releases the elastic element 20, and the vehicle body 12 accelerates upward under actions of acting force of the shock absorber 18 and the elastic potential energy stored in the elastic element 20, and finally drives the wheel 14 off the ground. This implements a jump at a specific driving speed. The active force provided by the shock absorber 18 mainly determines a jump height. It can be seen that the jump capability of the vehicle 100 is related to the active force provided by the shock absorber 18.

When traveling at a specific speed, the vehicle 100 has kinetic inertia. When the vehicle 100 is off the ground, the vehicle 100 can jump forward a specific distance due to the kinetic inertia. A magnitude of the driving speed determines a magnitude of the kinetic inertia, and further determines a forward jump distance. It can be seen that the jump capability of the vehicle 100 is related to the driving speed.

In an implementation, the vehicle 100 has a power battery. The power battery supplies power to a motor 40 of the active suspension system 16. The motor 40 is connected to the shock absorber 18. A magnitude of the active force that can be provided by the shock absorber 18 is determined by power of the motor 40, and the power of the motor 40 is determined by a state of charge of the power battery. It can be seen that the jump capability of the vehicle 100 is related to the state of charge of the vehicle.

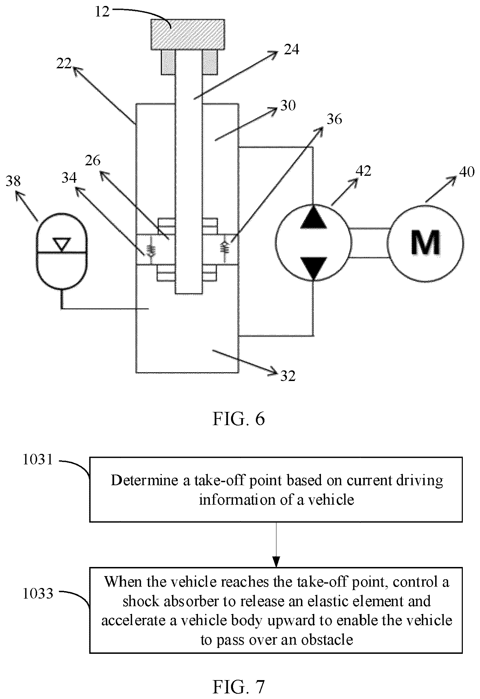

In some implementations, as shown in FIG. 3 and FIG. 6, the active suspension system 16 includes an elastic element 20, and the active force is acting force exerted by the shock absorber 18 on the elastic element 20 when a drive assembly 28 is controlled to enable the shock absorber 18 to compress the elastic element 20. In this way, flow of fluid can be used to provide the active force.

In an optional implementation, the shock absorber 18 and the elastic element 20 are connected between the vehicle body 12 and the wheel 14; the shock absorber 18 includes an outer cylinder assembly 22, a piston rod 24, a piston assembly 26, and a drive assembly 28. An upper chamber 30 and a lower chamber are disposed in the outer cylinder assembly 22. An upper end of the piston rod 24 and an upper end of the elastic element 20 are connected to the vehicle body 12, a lower end of the piston rod 24 is connected to the piston assembly 26, and a lower end of the elastic element 20 is connected to the wheel 14. The active force is an acting force exerted by the shock absorber 18 on the elastic element 20, when the drive assembly 28 is controlled to transfer fluid in the lower chamber to the upper chamber 30 to enable the piston assembly 26 to drive the piston rod 24 to compress the elastic element 20.

In an optional implementation, the fluid may be oil. When the drive assembly 28 transfers fluid in the lower chamber to the upper chamber 30, due to incompressibility of oil, oil in the upper chamber 30 presses down the piston assembly 26, and the piston assembly 26 drives the piston rod 24 to move downward, and then the piston rod 24 drives the vehicle body 12 to move downward, to compress the elastic element 20. When the drive assembly 28 transfers fluid in the upper chamber 30 to the lower chamber, oil in the lower chamber pushes up the piston assembly 26, and the piston assembly 26 drives the piston rod 24 to move upward. Further, the piston rod 24 drives the vehicle body 12 to move upward to release the elastic element 20, and the elastic element 20 extends and drives the vehicle body 12 to accelerate upward.

In some implementations, the active suspension system 16 includes the shock absorber 18 and the elastic element 20, and the shock absorber 18 and the elastic element 20 are connected between the vehicle body 12 and the wheel 14.

Referring to FIG. 7, controlling the active suspension system 16 to enable the vehicle 100 to pass over the obstacle 200 (step 103) includes:
Step 1031: determining a take-off point based on current driving information of the vehicle 100.
Step 1033: when the vehicle 100 reaches the take-off point, controlling the shock absorber 18 to release the elastic element 20 and accelerate the vehicle body 12 upward to enable the vehicle 100 to pass over the obstacle 200.

In this way, the vehicle 100 can jump at an appropriate take-off point, so that the vehicle 100 passes over the obstacle 200.

The current driving information includes a current driving speed, a current state of charge, a vehicle body height, and the like.

Specifically, each wheel 14 may be connected to the vehicle body 12 by using one suspension structure 17. An upper end of the shock absorber 18 and the upper end of the elastic element 20 can be connected to the vehicle body 12, and a lower end of the shock absorber 18 and the lower end of the elastic element 20 can be connected to the swing arm or the steering knuckle, and further connected to the wheel 14, so that the shock absorber 18 and the elastic element 20 are connected between the vehicle body 12 and the wheel 14.

The shock absorber 18 can extend and retract in a length direction to adjust a distance between the wheel 14 and the vehicle body 12, to further adjust a height of the vehicle body 12 to adapt to a road condition. When the shock absorber 18 extends, the distance between the wheel 14 and the vehicle body 12 can be increased, and the elastic element 20 can extend or retract. When the shock absorber 18 shortens, the distance between the wheel 14 and the vehicle body 12 can be reduced, and the shock absorber 18 provides the active force to the elastic element 20, and the elastic element 20 is compressed and stores the elastic potential energy. In an example, the elastic element 20 may be a spring.

The active force provided by the shock absorber 18 may be maximum active force that the shock absorber 18 can provide to the elastic element 20, or active force that is less than the maximum active force. This is not specifically limited herein.

When the vehicle weight is constant, and after the active force and the vehicle speed are determined, the height and the distance that the vehicle 100 can reach during a jump can also be determined. Further, it may be determined, based on the jump height and the jump distance that the vehicle 100 can reach, and the size of the obstacle 200, whether the vehicle 100 can pass over the obstacle 200.

If the vehicle 100 can pass over the obstacle 200, the take-off point is determined with reference to the current driving information of the vehicle 100. In an implementation, the vehicle 100 has the power battery, a motor 40 of the shock absorber 18 is powered by the power battery, and the current driving information of the vehicle 100 may include the state of charge of the vehicle 100.

In an implementation, the vehicle 100 jumps in a parabolic manner, and the take-off point should be at a specific distance in front of the obstacle 200. In an implementation, the take-off point may be predetermined through simulation, testing, and the like. For example, during simulation, testing, and the like, a scenario in which the vehicle 100 jumps over various common obstacles 200 can be simulated, and related parameters such as a size of the obstacle 200, a vehicle speed, the active force, driving information of the vehicle 100, a take-off point, and the like during simulation can be stored. During actual application, when the size of the obstacle 200 obtained matches the preset size of the obstacle 200, and the current driving information of the vehicle 100 matches preset driving information, the vehicle 100 can be adjusted, based on corresponding preset active force and a corresponding preset vehicle speed, to determine the take-off point, so that the vehicle 100 can pass over the obstacle 200. In an implementation, the vehicle 100 or a cloud server (the vehicle 100 may be communicatively connected to the cloud server) may store a calculation model. During actual application, the parameters such as the size of the obstacle 200, the active force, the vehicle speed, and the driving information of the vehicle 100 are input into the calculation model, to determine whether the vehicle 100 can pass over the obstacle 200 and determine the take-off point for passing over the obstacle 200.

Under a current vehicle speed, the active force, and the current driving information of the vehicle 100, the jump distance and the jump height that the vehicle 100 can reach after jumping can be calculated by using a related conversion relationship. Details are not described herein.

Under a current vehicle speed, the active force, and the current driving information of the vehicle 100, a jump curve L formed by the jump distance and the jump height that the vehicle 100 reaches after jumping is above the obstacle 200.

In an optional implementation, a lowest jump curve required by the vehicle body 12 to pass over the obstacle 200 can be obtained based on the obstacle information. With reference to the current driving information, a most appropriate take-off point for the vehicle 100 to pass over the obstacle 200 and a most appropriate jump curve corresponding to the most appropriate take-off point are obtained.

A first take-off range of the lowest jump curve for passing over the obstacle can be obtained based on a shape of the obstacle 200 and the lowest jump curve.

A target driving speed of the vehicle 100 in a horizontal direction during take-off can be determined based on the lowest jump curve. The driving speed in the horizontal direction may be determined based on the current driving speed and the vehicle acceleration capability, so that the vehicle can accelerate to a second take-off range that is greater than or equal to the target driving speed.

A required take-off speed of the vehicle 100 can be determined based on the lowest jump curve. A current compression status of the elastic element 20 can be obtained based on the vehicle body height, maximum power currently supported by the motor can be obtained based on the state of charge of the vehicle 100, and a third take-off range matching the lowest jump curve can be obtained based on the maximum power and the current compression state.

The take-off point may be a point in an overlapping area of the first take-off range, the second take-off range, and the third take-off range. For example, the take-off point may be a center point of the overlapping area, or a point that is in the overlapping area and that is closest to a current position.

When the vehicle 100 reaches the take-off point, the shock absorber 18 is controlled to release the elastic element 20 and accelerate the vehicle body 12 upward to enable the vehicle 100 to pass over the obstacle 200. When the vehicle 100 reaches the take-off point, the shock absorber 18 may extend. The elastic potential energy stored in the elastic element 20 may be released, and the elastic element 20 accelerates the vehicle body 12 upward. In addition, the extension of the shock absorber 18 may also accelerate the vehicle body 12 upward. Under dual acceleration of the shock absorber 18 and the elastic element 20, the vehicle body 12 is driven to accelerate upward. When the shock absorber 18 and the elastic element 20 reach maximum extension lengths, the upward accelerating vehicle body 12 drives the wheel 14 off the ground by using the active suspension system 16, and the vehicle 100 passes over the obstacle 200.

In some implementations, as shown in FIG. 6, the shock absorber 18 includes the outer cylinder assembly 22, the piston rod 24, the piston assembly 26, and the drive assembly 28. The upper chamber 30 and the lower chamber 32 are disposed in the outer cylinder assembly 22. The upper chamber 30 and the lower chamber 32 are filled with fluid. The piston rod 24 connects the piston assembly 26 and the vehicle body 12, and the piston assembly 26 separates the upper chamber 30 from the lower chamber 32.

When the vehicle 100 reaches the take-off point, controlling the shock absorber 18 to release the elastic element 20 and accelerate the vehicle body 12 upward to enable the vehicle 100 to pass over the obstacle 200 includes:
controlling the drive assembly 28 to transfer fluid in the upper chamber 30 to the lower chamber 32, so that the piston assembly 26 drives the piston rod 24 to release the elastic element 20.

In this case, the elastic element 20 is released by moving the piston rod 24 and the piston assembly 26.

Specifically, in an implementation, the outer cylinder assembly 22 is in a hollow cylindrical shape, and the piston assembly 26 separates the upper chamber 30 from the lower chamber 32. When fluid flows between the upper chamber 30 and the lower chamber 32, the piston assembly 26 can be driven to move up and down. The upper end of the piston rod 24 can be connected to the vehicle body 12, and the lower end extends into the outer cylinder assembly 22 to be connected to the piston assembly 26.

When fluid in the lower chamber 32 is transferred to the upper chamber 30, during a fluid transfer process, fluid pressure in the upper chamber 30 can drive the piston assembly 26 to move downward. Simultaneously, the piston assembly 26 drives the piston rod 24 to move downward, and the downward moving piston rod 24 drives the vehicle body 12 to compress the elastic element 20. When fluid in the upper chamber 30 is transferred to the lower chamber 32, during a fluid transfer process, fluid pressure in the lower chamber 32 can drive the piston assembly 26 to move upward. Simultaneously, the piston assembly 26 drives the piston rod 24 to move upward, and the upward moving piston rod 24 releases the elastic element 20 when lifting the vehicle body 12.

In an implementation shown in FIG. 6, each suspension structure 17 further includes a compression relief valve 34, a restoration relief valve 36, and an accumulator 38. The compression relief valve 34 and the restoration relief valve 36 are installed on the piston assembly 26, to control a maximum pressure difference between the upper chamber 30 and the lower chamber 32. Specifically, both the compression relief valve 34 and the restoration relief valve 36 are one-way valves. When the piston assembly 26 moves downward and a pressure difference between the upper chamber 30 and the lower chamber 32 exceeds a maximum pressure threshold, the restoration relief valve 36 opens, to maintain the pressure difference between the upper chamber 30 and the lower chamber 32 in a maximum pressure threshold range. When the piston assembly 26 moves upward and the pressure difference between the upper chamber 30 and the lower chamber 32 exceeds the maximum pressure threshold, the compression relief valve 34 opens, to maintain the pressure difference between the upper chamber 30 and the lower chamber 32 in the maximum pressure threshold range. This protects the shock absorber 18 and the drive assembly 28.

The lower chamber 32 of the shock absorber 18 is connected to the accumulator 38. The accumulator 38 may be an external accumulator 38 or an internal bladder accumulator, and is mainly used to compensate for pressure and volume changes generated inside the shock absorber 18 when the piston rod 24 moves up and down. The upper chamber 30 and the lower chamber 32 are both connected to the drive assembly 28.

In some implementations, the drive assembly 28 includes a motor 40 and a fluid pump 42. The motor 40 is connected to the fluid pump 42. The motor 40 drives the fluid pump 42 to actuate the shock absorber 18, so that the vehicle 100 passes over the obstacle 200.

In this way, the vehicle 100 can pass over the obstacle 200 by using the motor 40 and the fluid pump.

Specifically, the shock absorber 18 has the upper chamber and the lower chamber, the fluid pump 42 connects the upper chamber 30 and the lower chamber, and the motor 40 changes a rotation direction to transfer fluid from the lower chamber to the upper chamber 30 to extend the shock absorber 18, or transfer fluid from the upper chamber 30 to the lower chamber to shorten the shock absorber 18.

When the shock absorber 18 shortens, the elastic element 20 may be compressed. When the shock absorber 18 extends, the elastic element 20 may be released and the vehicle body 12 may be accelerated upward.

In some implementations, a first port 43 and a second port 45 of the fluid pump 42 communicate with the upper chamber 30 and the lower chamber respectively.

In this case, fluid may flow between the upper chamber 30 and the lower chamber by using the first port 43 and the second port 45.

Specifically, the fluid pump 42 may be a bidirectional fluid pump 42. When fluid is transferred from the upper chamber 30 to the lower chamber, the fluid enters the fluid pump 42 from the upper chamber 30 through the first port 43, and flows out from the second port 45 into the lower chamber. When fluid is transferred from the lower chamber to the upper chamber 30, the fluid enters the fluid pump 42 from the lower chamber through the second port 45, and flows out from the first port 43 into the upper chamber 30.

A rotation speed of the motor 40 can determine a flow speed of fluid and a fluid pressure difference between the upper chamber 30 and the lower chamber.

In an implementation, the active suspension system 16 performs the following actions to enable the vehicle 100 to jump:
(1) First stage: The motor 40 is started at a specific rotation speed (for example, a rotation speed less than a maximum rotation speed), the fluid pump 42 rotates in reverse, and fluid is transferred from the lower chamber 32 to the upper chamber 30. In this case, pressure in the upper chamber 30 is greater than pressure in the lower chamber 32, and the piston rod 24 is driven downward. Simultaneously, the elastic element 20 is also compressed and energy is stored. A pressure difference between the first port 43 and the second port 45 of the fluid pump 42 is monitored by pressure sensors at the first port 43 and the second port 45 of the fluid pump 42. When the fluid pressure difference between the upper chamber 30 and the lower chamber 32 reaches a maximum allowable pressure difference of the shock absorber 18, the fluid pressure difference no longer increases, and the piston rod 24 stops moving.
(2) Second stage: The motor 40 is started at the maximum rotation speed, the fluid pump 42 rotates forward, and fluid is transferred from the upper chamber 30 to the lower chamber 32, the piston rod 24 is driven upward. Simultaneously, the elastic potential energy accumulated in the elastic element 20 in the first stage is released, and the piston rod 24 and the elastic element 20 simultaneously drive the vehicle body 12 to accelerate upward.
(3) The third stage: When the piston rod 24 moves upward to a maximum allowable stroke, the elastic element 20 also stops extending, and the active suspension system 16 also reaches a maximum upward lift stroke. Because the vehicle body 12 continues to accelerate in the second stage and has a specific rising speed in the third stage, the wheel 14 is also be lifted off the ground due to being connected by the active suspension system 16.
(4) Fourth stage: When the vehicle 100 travels in a straight line at a specific speed, the vehicle 100 jumps to a specific height and lands after being airborne for a specific time period.

In some implementations, vehicle 100 includes a front wheel and a rear wheel.

When the vehicle 100 reaches the take-off point, controlling the shock absorber 18 to release the elastic element 20 and accelerate the vehicle body 12 upward to enable the vehicle 100 to pass over the obstacle 200 includes:
The shock absorber 18 is controlled to enable the front wheel and the rear wheel to jump simultaneously.

In this way, the front wheel and the rear wheel may jump simultaneously, so that the vehicle 100 passes over the obstacle 200.

Specifically, the take-off point includes a front wheel take-off point and a rear wheel take-off point, the shock absorber 18 includes a front wheel shock absorber 18 and a rear wheel shock absorber 18, and the elastic element 20 includes a front wheel elastic element 20 and a rear wheel elastic element 20.

When the front wheel reaches the front wheel take-off point, the front wheel shock absorber 18 is controlled to release the front wheel elastic element 20 and accelerate the vehicle body 12 upward to enable the front wheel to pass over the obstacle 200. When the rear wheel reaches the rear wheel take-off point, the rear wheel shock absorber 18 is controlled to release the rear wheel elastic element 20 and accelerate the vehicle body 12 upward to enable the rear wheel to pass over the obstacle 200. In this implementation, four wheels 14 jump simultaneously, so that the vehicle 100 passes over the obstacle 200. Therefore, the front wheel take-off point and the rear wheel take-off point that are present when the front wheel and the rear wheel leave the ground simultaneously can be calculated. In FIG. 4, a distance between the front wheel take-off point and the obstacle 200 is S1, and a distance between the rear wheel take-off point and the obstacle 200 is S2.

When the front wheel leaves the ground at the front wheel take-off point, a jump curve L formed by the front wheel is above the obstacle 200. When the rear wheel leaves the ground at the rear wheel take-off point, a jump curve L formed by the rear wheel is above the obstacle 200. Each shock absorber 18 can be controlled separately to provide appropriate active force, so that the jump curve L formed by the front wheel is above the obstacle 200 and the jump curve L formed by the rear wheel is above the obstacle 200.

In some implementations, vehicle 100 includes a front wheel and a rear wheel.

When the vehicle 100 reaches the take-off point, controlling the shock absorber 18 to release the elastic element 20 and accelerate the vehicle body 12 upward to enable the vehicle 100 to pass over the obstacle 200 includes:
The shock absorber 18 is controlled to enable the front wheel to jump first and the rear wheel to jump later.

In this way, the front wheel jumps first and the rear wheel jumps later, so that the vehicle 100 passes over the obstacle 200.

Specifically, the shock absorber 18 includes a front wheel shock absorber 18 and a rear wheel shock absorber 18, and the elastic element 20 includes a front wheel elastic element 20 and a rear wheel elastic element 20. When the front wheel reaches the front wheel take-off point, the front wheel shock absorber 18 is controlled to release the front wheel elastic element 20 and accelerate the vehicle body 12 upward to enable the front wheel to pass over the obstacle 200, and the rear wheel shock absorber 18 is controlled to maintain the rear wheel on the ground. When the rear wheel reaches the rear wheel take-off point, the rear wheel shock absorber 18 is controlled to release the rear wheel elastic element 20 and accelerate the vehicle body 12 upward to enable the rear wheel to pass over the obstacle 200. In FIG. 5, the front wheel take-off point and the rear wheel take-off point may be a same take-off point, and a distance between the take-off point and the obstacle 200 is S1.

When the front wheel leaves the ground at the front wheel take-off point, a jump curve L formed by the front wheel is above the obstacle 200. When the rear wheel leaves the ground at the rear wheel take-off point, a jump curve L formed by the rear wheel is above the obstacle 200. Each shock absorber 18 can be controlled separately to provide appropriate active force, so that the jump curve L formed by the front wheel is above the obstacle 200 and the jump curve L formed by the rear wheel is above the obstacle 200. In some implementations, the obstacle avoidance method further includes:
when it is determined that the vehicle 100 is not capable of passing over the obstacle 200, increasing a vehicle speed of the vehicle 100 and/or increasing the active force provided by the shock absorber 18 of the active suspension system 16.

This ensures that the vehicle 100 can pass over the obstacle 200.

Specifically, under the current vehicle speed and the current active force, the vehicle 100 fails to pass over the obstacle 200, indicating that the vehicle speed is too low or the active force is too small. If the active force and the vehicle speed can continue to increase, the vehicle speed and the active force can be increased. For example, the vehicle speed can be increased to a maximum speed limit of a road section, and the active force can be increased to the maximum active force that can be provided by the shock absorber 18.

In an implementation, if the vehicle speed cannot further increase, the active force may be increased, for example, the active force can be increased to the maximum active force that can be provided by the shock absorber 18.

In an implementation, if the active force cannot further increase, the vehicle speed may be increased, for example, the vehicle speed can be increased to a maximum speed limit of a road section.

The active force may be determined based on the fluid pressure difference that is between the upper chamber 30 and the lower chamber 32 and that is present when the piston assembly 26 moves downward. When the fluid pressure difference between the upper chamber 30 and the lower chamber 32 reaches a maximum pressure difference of the shock absorber 18, the active force cannot be increased.

In some implementations, the obstacle avoidance method further includes:
when it is determined that the vehicle 100 is not capable of passing over the obstacle 200, controlling the vehicle 100 to give an alert and to advise avoiding the obstacle 200 or stopping the vehicle 100.

In this way, a driver can be notified in time to pay attention to avoiding the obstacle 200.

Specifically, in an implementation, when a height of the obstacle 200 exceeds the maximum jump height of the vehicle 100, or a width of the obstacle 200 exceeds a maximum jump width of the vehicle 100, it can be considered that the vehicle 100 cannot pass over the obstacle 200.

In an implementation, when the vehicle speed reaches the maximum speed limit of the road section, a jump height of the vehicle 100 does not exceed the height of the obstacle 200, or a jump width of the vehicle 100 does not exceed the width of the obstacle 200, it can be considered that the vehicle 100 cannot pass over the obstacle 200.

There are many manners in which the vehicle 100 is controlled to give an alert. For example, a display component of the vehicle 100 (the display component includes but is not limited to a central control screen, an entertainment screen, a dashboard, a head-up display component, and the like of the vehicle 100) can be controlled to display alert information on a pop-up window, a speaker of the vehicle 100 can be controlled to broadcast the alert information, or a vibrator of a steering wheel can be controlled to vibrate to prompt for the alert information. Alternatively, the alert information can be sent to a user terminal, so that the user terminal obtains and prompts for the alert information. Alternatively, two or more of the foregoing manners may be combined. This is not specifically limited herein. The user terminal includes but is not limited to a mobile phone, a tablet computer, a wearable smart device (for example, a smart watch, smart glasses, or a smart helmet), and the like.

It is advised to avoid the obstacle 200, and a new path may be displayed on a navigation interface to bypass the obstacle 200. In response to a determining instruction of a user, the vehicle 100 may travel based on the new path to bypass the obstacle 200.

It is advised to stop the vehicle 100. The stop advice may be given by the vehicle 100 by using the display component and/or the speaker. In response to the determining instruction of the user, the vehicle 100 may brake (for example, fully brake).

In some implementations, the obstacle information includes the type of the obstacle 200. Before determining, based on the size of the obstacle 200, and the maximum jump height and the maximum jump distance of the vehicle 100, that the vehicle 100 is capable of passing over the obstacle 200, the obstacle avoidance method further includes:
determining, based on the size of the obstacle 200 and the type of the obstacle 200, that the vehicle 100 needs to pass over the obstacle 200.

In this case, before determining that the vehicle 100 can pass over the obstacle 200, it is determined that the vehicle 100 needs to pass over the obstacle 200.

Specifically, a size (for example, a narrower pothole) and a type (for example, a plastic bag) of an obstacle 200 that does not hinder normal traveling of the vehicle 100 and does not need to be passed over can be predetermined. In an implementation, a deep learning image processing model can identify the size and the type of the obstacle 200 obtained in real time, and compare the size and the type of the obstacle 200 with the predetermined size and the predetermined type of the obstacle 200 that does not hinder normal traveling.

When the size of the obstacle 200 obtained in real time matches the predetermined size of the obstacle 200 that does not hinder normal traveling, it is determined that the vehicle 100 does not need to pass over the obstacle 200 and can normally travel. When the size of the obstacle 200 obtained in real time does not match the predetermined size of the obstacle 200 that does not hinder normal traveling, it is determined that the vehicle 100 needs to pass over the obstacle 200. When the type of the obstacle 200 obtained in real time matches the predetermined type of the obstacle 200 that does not hinder normal traveling, it is determined that the vehicle 100 does not need to pass over the obstacle 200 and can normally travel. When the type of the obstacle 200 obtained in real time does not match the predetermined type of the obstacle 200 that does not hinder normal traveling, it is determined that the vehicle 100 needs to pass over the obstacle 200.

In some implementations, when the vehicle 100 passes over the obstacle 200, power of the motor 40 of the active suspension system 16 is greater than or equal to 3 kW.

This can ensure that the vehicle 100 can pass over the obstacle 200.

Specifically, a magnitude of the power of the motor 40 determines the maximum active force provided by the shock absorber 18. If the power of the motor 40 is greater than or equal to 3 kW, it can be ensured that the vehicle 100 can pass over the obstacle 200.

The power P of the motor 40 is greater than or equal to 3 kW, that is, P≥3 kW. In some examples, P may be 3 kW, 3.5 kW, 4 kW, 4.5 kW, 5 kW, 5.5 kW, 6 kW, 6.5 kW, 7 kW, or another value greater than or equal to 3 kW.

In an example, for a jump height of 50 mm, a 2-ton vehicle 100 requires 4.5 kW power of the motor 40, and a 3-ton vehicle 100 requires 7 kW power of the motor 40. With a vehicle speed of 60 km/h and the motor 40 with 4.5 kW power, the vehicle 100 can jump over a width of 3 m and a height of 50 mm.

In some implementations, when the vehicle 100 passes over the obstacle 200, push-up pressure of the piston rod 24 of the active suspension system 16 is greater than or equal to 8 MPa.

This can ensure that the vehicle 100 can pass over the obstacle 200.

Specifically, the push-up pressure of the piston rod 24 can accelerate the vehicle body 12 upward, and if the push-up pressure of the piston rod 24 greater than or equal to 8 MPa, it can be ensured that the vehicle 100 can pass over the obstacle 200.

The push-up pressure of the piston rod 24 is greater than or equal to 8 MPa, that is, P≥8 MPa. In some examples, P may be 8 MPa, 9 MPa, 10 MPa, 11 MPa, 12 MPa, 13 MPa, or another value greater than or equal to 8 MPa.

In an example, for a jump height of 50 mm, a 2-ton vehicle 100 requires 10 MPa push-up pressure P of the piston rod 24, and a 3-ton vehicle 100 requires 12 MPa push-up pressure P of the piston rod 24. With a vehicle speed of 60 km/h and 10 MPa push-up pressure P of the piston rod 24, the vehicle 100 can jump over a width of 2 m and a height of 40 mm.

In some implementations, when the vehicle 100 passes over the obstacle 200, an operating voltage of the motor 40 of the active suspension system 16 is greater than or equal to 350V.

This can ensure that the vehicle 100 can pass over the obstacle 200.

Specifically, the operating voltage of the motor 40 determines the maximum active force provided by the shock absorber 18. If the operating voltage of the motor 40 is greater than or equal to 350V, it can be ensured that the vehicle 100 can pass over the obstacle 200.

An operating voltage U of each motor 40 is greater than or equal to 350V, that is, U≥350V. In some examples, U may be 350V, 400V, 450V, 500V, 550V, 600V, 650V, or another value greater than or equal to 350V.

In an example, for a jump height of 50 mm, a 2-ton vehicle 100 requires an operating voltage of approximately 450V of the motor 40, and a 3-ton vehicle 100 requires an operating voltage of 600V of the motor 40. With a vehicle speed of 60 km/h and the motor 40 with an operating voltage of 450 V, the vehicle 100 can jump over a width of 2 m and a height of 50 mm.

In an optional implementation, when the vehicle 100 passes over the obstacle 200, the active suspension system 16 satisfies at least one of the following:
The power of the motor 40 of the active suspension system 16 is greater than or equal to 3 kW;
the push-up pressure of the piston rod 24 of the active suspension system 16 is greater than or equal to 8 MPa; and
the operating voltage of the motor 40 of the active suspension system 16 is greater than or equal to 350V.

In some implementations, the vehicle 100 includes a power battery, and the power battery is electrically connected to a motor 40 of the active suspension system 16, so that the power battery supplies power to the motor 40.

This ensures a power supply capability of the motor 40.

Specifically, the power battery provides electric energy for the vehicle 100 to travel. The power battery can implement a high-voltage output and can provide sufficient electric energy to a high-power motor 40, so that the motor 40 can enable the shock absorber 18 to provide required active force.

An active suspension system 16 according to an implementation of this application includes at least one suspension structure 17, the suspension structure 17 includes a motor 40 and a shock absorber 18 electrically connected to the motor 40, the motor 40 is configured to control a rotation direction and a rotation speed of the motor 40 when it is determined that a vehicle 100 can pass over an obstacle 200, so that the shock absorber 18 supports a vehicle body 12 of the vehicle 100 to pass over the obstacle 200.

The suspension system can control a rotation direction and a rotation speed of the motor 40, so that the shock absorber 18 supports the vehicle body 12 of the vehicle 100 to pass over the obstacle 200. In this way, the vehicle 100 can adapt to diverse road surfaces, and driving safety is also improved.

It should be noted that the foregoing descriptions about the implementations and beneficial effects of the obstacle avoidance method are also applicable to the active suspension system 16 according to this implementation. To avoid redundancy, details are not described again.

In some implementations, the suspension structure 17 further includes a fluid pump 42. The motor 40 is connected to the fluid pump 42. The fluid pump 42 is connected to the shock absorber 18. The motor 40 can drive the fluid pump 42 to actuate the shock absorber 18, so that the vehicle body 12 of the vehicle 100 passes over the obstacle 200.

In some implementations, the shock absorber 18 includes an upper chamber 30 and a lower chamber that are separated from each other, and the motor 40 can adjust the rotation direction to drive the fluid pump 42 to transfer fluid from the upper chamber 30 to the lower chamber, and to transfer fluid from the lower chamber to the upper chamber 30.

In some implementations, a first port 43 of the fluid pump 42 communicates with the upper chamber 30, and a second port 45 of the fluid pump 42 communicates with the lower chamber.

In some implementations, the motor 40 is configured to drive the shock absorber 18, to enable the shock absorber 18 to release an elastic element 20 and accelerate the vehicle body 12 upward to enable the vehicle 100 to pass over the obstacle 200.

In some implementations, the active suspension system 16 includes a plurality of suspension structures 17, and the plurality of suspension structures 17 are configured, so that when the vehicle 100 passes over the obstacle 200, each of the suspension structures 17 can separately drive each wheel 14 of the vehicle 100 off the ground.

In some implementations, determining that the vehicle 100 is capable of passing over the obstacle 200 is: determining, based on a size of the obstacle 200, and a maximum jump height and a maximum jump distance of the vehicle 100, that the vehicle 100 is capable of passing over the obstacle 200.

In some implementations, determining, based on the size of the obstacle 200, and the maximum jump height and the maximum jump distance of the vehicle 100, that the vehicle 100 is capable of passing over the obstacle 200 is: when the obstacle 200 is located below a highest jump curve based on the size of the obstacle 200, determining that the vehicle 100 is capable of passing the obstacle 200.

In some implementations, the jump capability of the vehicle 100 is obtained based on one or more of the following: active force provided by a shock absorber 18 of the active suspension system 16, a driving speed of the vehicle 100, and a state of charge of the vehicle 100.

In the active suspension system 16 according to this implementation of this application, in a possible implementation, a control process of the suspension structure 17 can be implemented by an internal control module of the motor 40; in another possible implementation, a control module can be configured for the active suspension system 16 to control a related process of implementing the foregoing control method; in still another possible implementation, all suspension structures 17 of the active suspension system 16 may be controlled by using a controller of the vehicle 100, to implement the control process.

Referring to FIG. 2, a suspension control apparatus 46 according to an implementation of this application includes a controller 44, where the controller 44 is configured to be electrically connected to an active suspension system 16, and the controller 44 is configured to implement steps in the obstacle avoidance method in any according to the foregoing implementations.

Specifically, the suspension control apparatus 46 may be mounted on a vehicle body 12, and the controller 44 may be electrically connected to a motor controller and a pre-view system. When it is determined, based on obstacle information, that a vehicle 100 can pass over an obstacle 200, the controller 44 may control the active suspension system 16 to enable the vehicle 100 to pass over the obstacle 200.

A vehicle 100 according to an implementation of this application includes the active suspension system 16 according to any one of the foregoing implementations, and/or the suspension control apparatus 46 according to the foregoing implementations.

Specifically, the vehicle 100 includes but is not limited to a pure electric vehicle, a hybrid vehicle, and an enhanced electric vehicle.

In an implementation, the vehicle 100 includes the active suspension system 16 and the suspension control apparatus 46, and a controller 44 is electrically connected to the active suspension system 16. The controller 44 may control the active suspension system 16 to implement steps of the obstacle avoidance method according to any one of the foregoing implementations.

In an implementation, the vehicle 100 includes the active suspension system 16. When a motor 40 of the active suspension system 16 determines, based on obstacle information, that the vehicle 100 can pass over an obstacle 200, the motor 40 controls a rotation direction and a rotation speed of the motor 40, so that a shock absorber 18 supports a vehicle body 12 of the vehicle 100 to pass over the obstacle 200.

In an implementation, the vehicle 100 includes the suspension control apparatus 46, and the controller 44 can implement steps of the obstacle avoidance method according to any one of the foregoing implementations.

It should be noted that foregoing descriptions about the implementations and beneficial effects of the obstacle avoidance method and the active suspension system 16 are also applicable to the suspension control apparatus 46 and the vehicle 100 according to this implementation. To avoid redundancy, details are not described again.

It may be understood that a computer program includes computer program code. The computer program code may be in a source code form, an object code form, an executable file, an intermediate form, or the like. A computer-readable storage medium may include: any entity or apparatus that can carry the computer program code, a recording medium, a USB flash drive, a removable hard disk, a magnetic disk, an optical disc, a computer memory, a read-only memory (ROM, Read-Only Memory), a random access memory (RAM, Random Access Memory), software distribution medium, and the like. The processor may be a central processing unit, a general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or transistor logic device, a discrete hardware component, or the like.

In the descriptions of this specification, the reference term such as "an implementation", "some implementations", "example implementation", "example", "specific example", or "some examples" means that specific features, structures, materials, or characteristics described with reference to the implementations are included in at least one implementation or example of this application. In this specification, example expressions of the foregoing terms do not necessarily mean a same implementation or example. Furthermore, the specific features, structures, materials, or characteristics may be combined in a proper manner in any one or more of implementations or examples.

Although implementations of this application are shown and described, a person of ordinary skill in the art may understand that various changes, modifications, replacements, and variations can be made to the implementations, without departing from the principles and purposes of this application. The scope of this application is defined by the claims and their equivalents.

## Claims

1. An obstacle avoidance method for a vehicle, wherein the vehicle comprises a vehicle body, a wheel, and an active suspension system, the active suspension system connects the vehicle body and the wheel, and the obstacle avoidance method comprises:
obtaining road surface information, wherein the road surface information comprises obstacle information; and
when it is determined, based on the obstacle information, that the vehicle is capable of passing over an obstacle, controlling the active suspension system to enable the vehicle to pass over the obstacle.

2. The obstacle avoidance method according to claim 1, wherein the road surface information is obtained by performing image identification on road surface image data.

3. The obstacle avoidance method according to claim 1 or 2, wherein the obstacle information comprises a size of the obstacle, and the method further comprises:
determining, based on the size of the obstacle, and a maximum jump height and a maximum jump distance of the vehicle, that the vehicle is capable of passing over the obstacle.

4. The obstacle avoidance method according to claim 3, wherein determining, based on the size of the obstacle, and the maximum jump height and the maximum jump distance of the vehicle, that the vehicle is capable of passing over the obstacle comprises: when the obstacle is located below a highest jump curve based on the size of the obstacle, determining that the vehicle is capable of passing over the obstacle, wherein
the highest jump curve is a jump curve formed based on the maximum jump height and the maximum jump distance that are supported by a jump capability of the vehicle.

5. The obstacle avoidance method according to claim 4, wherein the jump capability of the vehicle is obtained based on one or more of the following: active force provided by a shock absorber of the active suspension system, a driving speed of the vehicle, and a state of charge of the vehicle.

6. The obstacle avoidance method according to claim 5, wherein the active suspension system comprises an elastic element, and the active force is acting force exerted by the shock absorber on the elastic element when a drive assembly is controlled to enable the shock absorber to compress the elastic element.

7. The obstacle avoidance method according to any one of claims 1 to 6, wherein the active suspension system comprises the shock absorber and the elastic element, and the shock absorber and the elastic element are connected between the vehicle body and the wheel; and
controlling the active suspension system to enable the vehicle to pass over the obstacle comprises:
determining a take-off point based on current driving information of the vehicle; and
controlling, when the vehicle reaches the take-off point, the shock absorber to release the elastic element and accelerate the vehicle body upward to enable the vehicle to pass over the obstacle.

8. The obstacle avoidance method according to claim 7, wherein the shock absorber comprises an outer cylinder assembly, a piston rod, a piston assembly, and the drive assembly, an upper chamber and a lower chamber are disposed in the outer cylinder assembly, the upper chamber and the lower chamber are filled with fluid, the piston rod connects the piston assembly and the vehicle body, and the piston assembly separates the upper chamber from the lower chamber; and
controlling, when the vehicle reaches the take-off point, the shock absorber to release the elastic element and accelerate the vehicle body upward to enable the vehicle to pass over the obstacle comprises:
controlling the drive assembly to transfer fluid in the upper chamber to the lower chamber, so that the piston assembly drives the piston rod to release the elastic element.

9. The obstacle avoidance method according to claim 8, wherein the drive assembly comprises a motor and a fluid pump, the motor is connected to the fluid pump, and the motor drives the fluid pump to actuate the shock absorber, so that the vehicle passes over the obstacle.

10. The obstacle avoidance method according to claim 9, wherein a first port and a second port of the fluid pump communicate with the upper chamber and the lower chamber respectively.

11. The obstacle avoidance method according to any one of claims 7 to 10, wherein the vehicle comprises a front wheel and a rear wheel; and
controlling, when the vehicle reaches the take-off point, the shock absorber to release the elastic element and accelerate the vehicle body upward to enable the vehicle to pass over the obstacle comprises:
controlling the shock absorber to enable the front wheel and the rear wheel to jump simultaneously, or;
controlling the shock absorber to enable the front wheel to jump first and the rear wheel to jump later.

12. The obstacle avoidance method according to any one of claims 1 to 11, wherein the obstacle avoidance method further comprises:
when it is determined that the vehicle is not capable of passing over the obstacle, increasing a vehicle speed of the vehicle and/or increasing the active force provided by the shock absorber of the active suspension system.

13. The obstacle avoidance method according to any one of claims 1 to 12, wherein the obstacle avoidance method further comprises:
when it is determined, based on the obstacle information, that the vehicle is not capable of passing over the obstacle, controlling the vehicle to give an alert and to advise avoiding the obstacle or stopping the vehicle.

14. The obstacle avoidance method according to claim 3, wherein the obstacle information comprises a type of the obstacle, and before determining, based on the size of the obstacle, and the maximum jump height and the maximum jump distance of the vehicle, that the vehicle is capable of passing over the obstacle, the obstacle avoidance method further comprises:
determining, based on the size of the obstacle and the type of the obstacle, that the vehicle needs to pass over the obstacle.

15. The obstacle avoidance method according to any one of claims 1 to 14, wherein when the vehicle passes over the obstacle, power of a motor of the active suspension system is greater than or equal to 3 kW, and/or
when the vehicle passes over the obstacle, push-up pressure of the piston rod of the active suspension system is greater than or equal to 8 MPa, and/or
when the vehicle passes over the obstacle, an operating voltage of the motor of the active suspension system is greater than or equal to 350V.

16. The obstacle avoidance method according to any one of claims 1 to 15, wherein the vehicle comprises a power battery, and the power battery is electrically connected to the motor of the active suspension system, so that the power battery supplies power to the motor.

17. An active suspension system, comprising at least one suspension structure, wherein the suspension structure comprises a motor and a shock absorber electrically connected to the motor, the motor is configured to control a rotation direction and a rotation speed of the motor when it is determined that a vehicle is capable of passing over an obstacle, so that the shock absorber supports a vehicle body of the vehicle to pass over the obstacle.

18. The active suspension system according to claim 17, wherein the suspension structure further comprises a fluid pump, the motor is connected to the fluid pump, the fluid pump is connected to the shock absorber, and the motor is capable of driving the fluid pump to actuate the shock absorber, so that the vehicle body of the vehicle passes over the obstacle.

19. The active suspension system according to claim 18, wherein the shock absorber comprises an upper chamber and a lower chamber that are separated, and the motor is capable of adjusting the rotation direction to drive fluid in the fluid pump to transfer from the upper chamber to the lower chamber and to transfer from the lower chamber to the upper chamber.

20. The active suspension system according to claim 19, wherein a first port of the fluid pump is connected to the upper chamber, and a second port of the fluid pump is connected to the lower chamber.

21. The active suspension system according to any one of claims 17 to 20, wherein the suspension structure comprises an elastic element, and the motor is configured to drive the shock absorber, so that the shock absorber releases the elastic element and accelerates the vehicle body upward to enable the vehicle to pass over the obstacle.

22. The active suspension system according to any one of claims 17 to 21, wherein the active suspension system comprises a plurality of suspension structures, and the plurality of suspension structures are configured, so that when the vehicle passes over the obstacle, each of the suspension structures is capable of separately driving each wheel of the vehicle off the ground.

23. The active suspension system according to any one of claims 17 to 21, wherein determining that the vehicle is capable of passing over the obstacle is: determining, based on a size of the obstacle, and a maximum jump height and a maximum jump distance of the vehicle, that the vehicle is capable of passing over the obstacle.

24. The active suspension system according to claim 23, wherein determining, based on the size of the obstacle, and the maximum jump height and the maximum jump distance of the vehicle, that the vehicle is capable of passing over the obstacle comprises: when the obstacle is located below a highest jump curve based on the size of the obstacle, determining that the vehicle is capable of passing over the obstacle.

25. The active suspension system according to claim 24, wherein a jump capability of the vehicle is obtained based on one or more of the following: active force provided by a shock absorber of the active suspension system, a driving speed of the vehicle, and a state of charge of the vehicle.

26. A suspension control apparatus, comprising a controller, wherein the controller is configured to be electrically connected to an active suspension system, and the controller is configured to implement steps in the obstacle avoidance method according to any one of claims 1 to 16.

27. A vehicle, comprising the active suspension system according to any one of claims 17 to 25, and/or the suspension control apparatus according to claim 26.
